# EUROPÄISCHE PATENTSCHRIFT

(11) **EP 2 067 308 B1**
(45) Veröffentlichungstag und Bekanntmachung des Hinweises auf die Patenterteilung: **10.09.2014**
(21) Anmeldenummer: 07786352.0
(22) Anmeldetag: 26.07.2007
(51) Int. Cl.: H04L 12/28

(54) **VERFAHREN ZUR AUTHENTIFIZIERUNG EINES DSL-NUTZERS**
METHOD FOR AUTHENTICATING A DSL USER
PROCÉDÉ POUR L'AUTHENTIFICATION D'UN UTILISATEUR DSL

(30) Priorität: 25.09.2006 DE 102006045194
(43) Veröffentlichungstag der Anmeldung: 10.06.2009
(73) Patentinhaber: Telefónica Germany GmbH & Co. OHG, 80992 München (DE)
(72) Erfinder: BOCK, Bernhard, 81241 München (DE); DÖRR, Peter, 80638 München (DE)
(74) Vertreter: Herrmann, Uwe
(86) Internationale Anmeldenummer: PCT/EP2007/006634
(87) Internationale Veröffentlichungsnummer: WO 2008/037312

(56) Entgegenhaltungen:
- US-A1- 2003 101 243
- US-A1- 2005 102 408
- YOO K J ET AL: "Remote Management System for xDSL" COMMUNICATIONS, 2005 ASIA-PACIFIC CONFERENCE ON PERTH, WESTERN AUSTRALIA 03-05 OCT. 2005, PISCATAWAY, NJ, USA,IEEE, 3. Oktober 2005 (2005-10-03), Seiten 635-639, XP010860861 ISBN: 0-7803-9132-2

## Beschreibung

Die vorliegenden Erfindung betrifft ein Verfahren zur Authentifizierung eines DSL-Nutzers.

Bei heute bekannten Systemen erfolgt die Internetnutzung per DSL derart, dass der beim Nutzer befindliche DSL-Router zunächst feststellen muß, ob ein DSL-AC (Digital Subscriber Line Access Concentrater) vorhanden ist. Der DSL-AC ist ein Router, der den Übergabepunkt eines DSL-Netzes zum Internet bzw. zu einem Backbone, der Teil des Internets ist, bildet. Eine Kommunikation ist nur über MAC-Adressen, d. h. eine Hardware-Adresse möglich. Da aber der DSL-Router des Nutzers die MAC-Adresse vom DSL-AC nicht kennt, sendet dieser das PADI-Paket (PADI = PPPoE Active Discovery Initiation) über einen Ethemet-Broadcast.

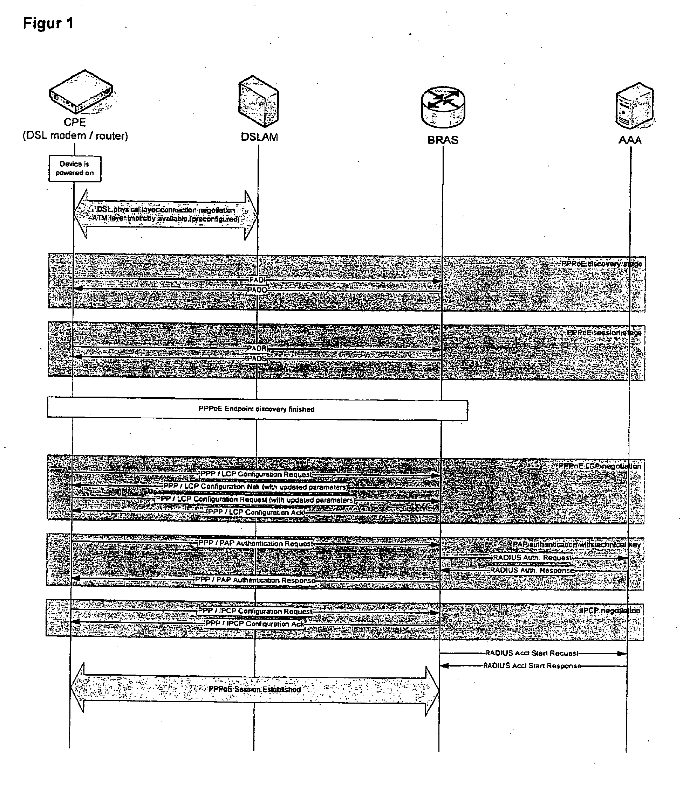

Ein Beispiel für ein derartiges Einwahlverfahren ergibt sich aus Figur 1. Wie dies aus Figur 1 hervorgeht, wird die PADI-Anfrage vom DSL-Router des Nutzers über den DSLAM (Digital Subscriber Line Access Multiplexer) an den DSL-AC weitergegeben. Der DSLAM terminiert die Teilnehmeranschlußleitungen, sammelt (oder verteilt) auf örtlicher Ebene den DSL-Datenverkehr der Kunden und reicht ihm an einen regionalen DSL-AC weiter.

Wie dies weiter aus Figur 1 hervorgeht, erhält der Nutzer bzw. dessen DSL-Router unter Nutzung seiner Absendeadresse vom DSL-AC ein PADO-Paket (PADO = PPPoE Active Discovery Offer). Das PADO-Paket beinhaltet beispielsweise die DSL-AC-Adresse sowie u. a. den Namen des DSL-AC.

Der DSL-Router des Nutzers hat nun einen DSL-AC zu wählen, wozu dieser das PADR-Paket (PADR = PPPoE Active Discovery Request) versendet, was vom DSL-AC mit dem PADS-Paket (PADS = PPPoE Active Discovery Session Confirmation) bestätigt wird. Die Verbindung mit dem DSL-AC ist nun aufgebaut und der Authentifizierungsprozess beginnt.

Bei den heute bekannten Systemen ist es erforderlich, dass sich der Nutzer aktiv bei der Neueinrichtung seines DSL-Zugangs beteiligt, und zwar durch Eingabe von Authentifizierungsdaten, wie Name und Paßwort, die ihm vom Provider zuvor mitgeteilt wurden.

Eine derartige Vorgehensweise ist insofern nachteilig, als dem Kunden Eingabefehler unterlaufen können, bzw. der Kunde nicht weiß, was zum Zwecke der Neueinrichtung seines DSL-Zugangs zu tun ist, er somit also überfordert ist.

Aus der US 2005/0102408 A1 ist ein Verfahren zur Authentifizierung eines DSL-Nutzers bekannt, wobei eine den Nutzer identifizierende Information zu einem ISP-Webserver geschickt wird, um diesen anzumelden, dort diese Information ausgelesen wird und sodann Konfigurationsinformationen seitens des ISP-Webservers zum ADSL-Modem des Nutzers geschickt werden.

Die US 2003/0101243 A1 betrifft ein System und ein Verfahren zur automatischen Konfiguration eines bidirektionalen Kommunikationssystems, insbesondere eines DSL-Anschlusses. Dabei werden die grundlegenden Konfigurationsinformationen, die insbesondere die IP-Adresse betreffen, von einem DHCP-Server während des Anschließvorganges bezogen.

Die Druckschrift "YOO, KJ et al.: "Remote Management System for xDSL", Communications, 2005 Asia-Pacific Conference on Perth, Western Australia 03-05 OCT. 2005, PISCATAWAY, NJ, USA, IEEE, 3. Oktober 2005, Seiten 635-639, XP010860861 ISBN: 0-7803-9132-2" betrifft unter Anderem eine Autokonfiguration von DSL-Anschlüssen ohne ein Eingreifen des DSL-Nutzers. Als Funktionen werden ein Auto-Setup, eine Auto-Konnektion, eine Auto-Rekonnektion und eine Auto-Authentifizierung beschrieben.

Der vorliegenden Erfindung liegt somit die Aufgabe zugrunde, ein Verfahren zur Einrichtung eines DSL-Zugangs bereitzustellen, das auch ohne Interaktion durch den Nutzer auskommt und das sowohl für den Nutzer als auch für den Provider keinen oder nur einen vergleichsweise geringen Aufwand mit sich bringt.

Diese Aufgabe wird durch ein Verfahren mit den Merkmalen des Anspruchs 1 gelöst. Danach ist vorgesehen, dass zum Zwecke der Authentifizierung automatisch eine Kennung an die Authentifizierungseinheit übermittelt und dort geprüft wird und dass mittels einer Autokonfigurationseinheit über die Verbindung zum DSL-Router eine automatische Konfiguration des DSL-Routers und/oder von mit diesem in Verbindung stehenden Komponenten, wie beispielsweise Komponenten eines WLAN oder LAN oder einer VoIP-Anlage vorgenommen wird bzw. vorgenommen werden kann.

Bei der Kennung kann es sich beispielsweise um eine die Verbindung zum DSL-Router kennzeichnende Leitungskennung handeln. Denkbar ist ebenfalls, dass es sich bei der Kennung um eine Hardwarekennung handelt, die beispielsweise den DSL-Router und/oder eine oder mehrere mit diesem in Verbindung stehende Komponenten kennzeichnen. Denkbar ist beispielsweise, auf die Seriennummer des DSL-Routers als Identifier zurückzugreifen, wozu eine entsprechende Logistik zum Erfassen und Aktualisieren von Seriennummem erforderlich wäre. Grundsätzlich kommen selbstverständlich auch andere Identifier als die Seriennummer des DSL-Routers bzw. einer mit diesem in Verbindung stehenden Komponente in Betracht.

Beispielsweise ist über eine oder mehrere DSL-Router-Kennungen oder Leitungskennungen, d. h. eine die Verbindung und damit den Nutzer identifizierende Kennung, möglich, den Nutzer bzw. dessen Teilnehmerleitung ohne Interaktionen durch den Nutzer zu identifizieren und somit auf dieser Grundlage eine Authentifizierung vorzunehmen.

In einer Ausgestaltung der Erfindung ist vorgesehen, dass der DSL-Router über einen DSLAM mit einem DSL-AC in Verbindung steht und dass die Kennung, beispielsweise eine Leitungskennung, vom DSLAM ausgegeben und sodann an den DSL-AC übermittelt wird.

Dabei kann vorgesehen sein, dass die Kennung vom DSLAM im Rahmen der Übermittlung eines Paketes vom DSL-Router an den DSL-AC innerhalb des Authentisierungsprozesses, beispielsweise im Rahmen der Übermittlung des PADI-Pakets und/oder des PADR-Pakets, hinzugefügt wird.

In einer weiteren Ausgestaltung der vorliegenden Erfindung ist vorgesehen, dass die die Autokonfiguration des DSL-Routers bzw. der mit diesem in Verbindung stehenden Komponenten durch die Autokonfigurationseinheit auf Anfrage durch den DSL-Router, in bestimmten Zeitabständen oder bei Aktualisierungs- bzw. Updatebedarf erfolgt. Denkbar ist beispielsweise, dass die Übersendung von Konfigurationsdaten nur auf Anfrage durch den DSL-Router erfolgt. Denkbar ist auch, dass z.B. bei Vorliegen neuer Softwareversionen die Autokonfigurationseinheit von sich aus ein Update an alle bzw. alle erreichbaren DSL-Router vornimmt.

Die Autokonfiguration kann beispielsweise die Übermittlung von Parametersätzen, Settings oder Firmware, d. h. Betriebssystemen etc. umfassen.

Die Autokonfiguration kann auch die Übermittlung eines WLAN-Keys umfassen, der beispielsweise beim Customer-Service vorliegt und über die DSL-Verbindung an den DSL-Router bzw. an die mit diesem in Verbindung stehenden AnlagenKomponenten übermittelt wird. Auch ist es möglich, dass die Autokonfiguration die Übermittlung von Telefonnummern des Nutzers umfaßt.

In einer weiteren Ausgestaltung der Erfindung ist denkbar, dass die Autokonfiguration die Übermittlung von Usernamen und/oder Passworten, insbesondere für die Nutzung von Voice over IP oder IP-TV bzw. den Zugriff auf Server, die im Heimatnetz des Kunden lokalisiert sind, umfaßt und damit das Server-Managment regelt.

Die Autokonfiguration kann beispielsweise des Weiteren die Übermittlung von Information bezüglich der zu nutzenden Bandbreiten umfassen. Denkbar ist beispielsweise, dass die Autokonfigurationsdaten Informationen darüber enthalten, welche Bandbreite der DSL-Router zum Beispiel für IP-TV etc. zur Verfügung stellen muß. Auch die Einrichtung und Vermaltung von Public Hot Spots auf der Basis des gewöhnlichen DSL-Routers und somit die Einführung neuer Geschäftsmodelle ist denkbar.

In einer weiteren Ausgestaltung der Erfindung ist vorgesehen, dass zeitgleich oder zumindest in zeitlichem Zusammenhang durch die Autokonfigurationseinheit eine Vielzahl von DSL-Routem und/oder von mit diesen in Verbindung stehenden Komponenten autokonfiguriert wird. Dadurch wird es möglich, neue Funktionalitäten bzw. Dienste automatisch auszurollen bzw. Updates allen verfügbaren DSL-Routem zur Verfügung zu stellen. Dies ist für die Nutzer und den Provider bequem und erhöht zudem die Wahrscheinlichkeit dafür, dass alle oder zumindest eine Vielzahl von Nutzern über den gleichen Hard- bzw. Softwarestand verfügt, was die Wartung und den Support, sofern erforderlich, vereinfacht.

Weiterhin kann vorgesehen sein, dass in der Autokonfigurationseinheit oder in einer mit dieser in Verbindung stehenden Speicher-Einheit Informationen über die Hardware und Software der eingesetzten DSL-Router bzw. von mit diesen in Verbindung stehenden Komponenten vorliegt und dass die Autokonfiguration in Abhängigkeit von diesen Informationen vorgenommen wird.

Auch ist denkbar, dass in der Autokonfigurationseinheit oder in einer mit dieser in Verbindung stehenden Einheit Informationen über die Leitungskennung der einzelnen DSL-Router und/oder von mit diesen in Verbindung stehenden Komponenten vorliegt und dass die Autokonfiguration in Abhängigkeit von diesen Informationen vorgenommen wird.

In einer Ausgestaltung der Erfindung wird die Autokonfiguration aufgrund der im Rahmen des Authentifizierungsprozesses übermittelten Kennung oder Kennungen die Autokonfiguration des DSL-Routers und/oder der mit diesem in Verbindung stehenden oder verbindbaren Komponenten vorgenommen.

Wie bereits ausgeführt, können die von der Autokonfigurationseinheit übermittelten Daten zur Autokonfiguration des DSL-Routers bzw. zur Konfiguration von mit dem DSL-Router in Verbindung stehenden Komponenten, insbesondere von Komponenten eines WLANs, VPN, PC, VoIP-Systemen, IP-TV-Systemen oder Gateways und dergleichen dienen.

Grundsätzlich ist das Verfahren bei der Erst- und/oder auch bei Neukonfigurationen bzw. bei Updates oder im Rahmen des Service einsetzbar. Der Vorteil des erfindungsgemäßen Verfahrens besteht darin, dass sich der Nutzer weder an der Neueinrichtung seines DSL-Zugangs aktiv beteiligen muß, noch dass es erforderlich ist, dass der Nutzer Aktivitäten zum Update seines DSL-Zugangs bzw. der dazu erforderlichen Komponenten entfalten muss.

In weiterer Ausgestaltung der Erfindung ist denkbar, dass beim Reset des DSL-Routers durch den Nutzer, der beispielsweise bei einer fehlerhaften Bedienung erforderlich ist, automatisch eine Neukonfiguration des DSL-Routers durch den Autokonfigurationsserver erfolgt, ohne dass der Nutzer eingreifen muss. Denkbar ist es somit, dass auf Anforderung durch den Nutzer bzw. den DSL-Router automatisch die aktuelle Konfigurationsversion an den DSL-Router übermittelt wird, woraufhin dieser bzw. die mit diesem in Verbindung stehenden Komponenten oder Anlagen automatisch mit einer aktuellen Fassung der Konfigurationsdaten konfiguriert werden können.

Erfindungsgemäß ist vorgesehen, dass für eine Teilnehmer-Anschlußleitung eine oder mehr als eine Kennung, beispielsweise eine oder mehrere Leitungskennungen vergeben werden. Denkbar ist somit beispielsweise, eine virtuelle Kennung für die Übertragung von Sprache und eine virtuelle Kennung für die Übertragung von Daten zu vergeben.

Dabei kann vorgesehen sein dass die einzelnen Kennungen, beispielsweise Leitungskennungen, durch den Provider im Bedarfsfall voneinander getrennt (selektiv) gesperrt werden können. Denkbar ist beispielsweise dem Kunden die Nutzung des Internets zu untersagen, ihm den Telefonbetrieb jedoch weiterhin zu ermöglichen.

Die oben näher erläuterte automatische Authentisierung des Nutzers ist die Basis für die beschriebene erfindungsgemäße einfache Inbetriebnahme und Wartung des DSL-Access-Routers.

Als Vorteile der automatischen Authentisierung für den Kunden in Kombination mit automatischer Routerkonfiguration können in bevorzugter Ausgestaltung der Erfindung genannt werden:
- die konfigurationsfreie Inbetriebnahme von VoIP-Telefonen/Anlagen
- die konfigurationsfreie Inbetriebnahme eines Internetzugangs per LAN und WLAN
- die konfigurationsfreie Inbetriebnahme von VPN-Lösungen,
- die konfigurationsfreie Inbetriebnahme von Homegateway-Funktionen, beispielsweise die zentrale Ablage von Mulitmediadaten für den Haushalt,
- die konfigurationsfreie Inbetriebnahme von IP-TV Lösungen,
- die Möglichkeit des Einsatzes nicht vorkonfigurierter, d.h. universeller DSL-Router,
- die Tatsache, dass zur Installation von Software Updates (Bug Fixes, neue Features) auf dem Router keine Kundenaktivität nötig ist
- sowie erhöhte Sicherheit, da beispielsweise Passwörter ausspioniert werden können, beispielsweise jedoch die Leitungskennung nicht ohne weiteres gefälscht werden kann.

Vorteile ergeben sich jedoch nicht nur für den Nutzer, sondern auch für die Betreiber der DSL-Infrastruktur. Diese können in bevorzugter Ausgestaltung der Erfindung darin bestehen,
- dass dieser geringe Supportkosten hat, da bei der Inbetriebnahme keine Konfiguration notwendig ist,
- dass geringe Logistikkosten möglich sind, da die erfindungsgemäße Lösung vorzugsweise keine endgerätespezifischen Parameter benutzt
- dass im Betrieb geringere Supportkosten entstehen, da die Wahrscheinlichkeit für falsche Konfigurationen durch die Nutzer gering sind und Software Updates ohne Interaktion durch die Nutzer aufgespielt werden,
- dass sich Fehlkonfigurationen durch den Endkunden mit einem einfachen Reset auf eine funktionsfähige individualisierte Ausgangskonfiguration zurück stellen lassen und
- dass sich neue Umsatzquellen einfach erschließen lassen, indem neue Funktionen/Produkte kostengünstig und schnell und flächendeckend ausgerollt werden können, wodurch einfach neue Geschäftsmöglichkeiten aufbaubar sind.

Weitere Einzelheiten und Vorteile der Erfindung werden anhand eines in der Zeichnung dargestellten Ausführungsbeispiels näher erläutert. Es zeigen:
- Figur 1 - 3:: unterschiedliche Darstellungen des Verbindungsaufbaus eines DSL-Routers mit dem Internet über einen DSL-AC mit automatischer Authentifizierung und Autokonfiguration.

Wie dies bereits zur Figur 1 erläutert wurde, nimmt das CPE (Customer Premises Equipment) bzw. das DSL-Modem/Router über den DSLAM mit dem DSL-AC über die Nachrichten PADI, PADO, PADR und PADS zum Zwecke der Herstellung einer Verbindung Kontakt auf. Wie dies weiter aus Figur 1 hervorgeht, schließt sich daran die Authentifizierung mittels des Systems "AAA" (Authentication, Authorisation, Accounting) an. Dabei handelt es sich um eine Einheit, die die Authentifizierung, die Authorisierung und die Abrechnung des Netzwerkzugangs des Nutzers durchführt.

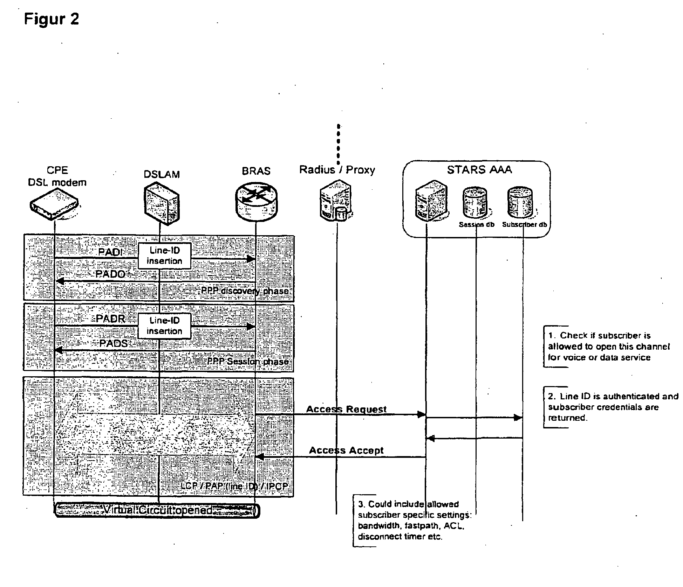

Wie dies aus Figur 2 hervorgeht, wird über den DSLAM in den Nachrichten PADI und PADR die Leitungskennung (Line-ID) eingefügt, d. h. eine Kennung, die die Verbindungsleitung zum DSL-Modem bzw. Router kennzeichnet. Wie oben ausgeführt, kann dabei eine Leitung genau eine derartige Kennung aufweisen oder es können der Leitung auch mehrere virtuelle Kennungen zugewiesen werden, die beispielsweise für Sprache oder Daten verwendet werden können.

Die Mitteilung der Kennung bzw. Leitungskennung erlaubt es, die Authentifizierung des Nutzers vorzunehmen, ohne dass dazu dessen Mithilfe erforderlich ist. Basierend darauf kann ebenfalls ohne Nuterinteraktion die Autokonfiguration erfolgen. Die in diesem Ausführungsbeispiel beschriebene Vorgehensweise bzw. dessen Merkmale sind nicht auf die Verwendung einer Kennung in Form einer Leitungskennung beschränkt, sondern auch beim Einsatz anderer Kennungen einsetzbar, wie z.B. einer Kennung des DSL-Routers bzw. von Kennungen von mit diesem in Verbindung stehenden oder verbindbaren Komponenten.

Der DSLAM verfügt somit über eine Zusatzintelligenz, die veranlasst, dass die Leitungskennung über das DSL-AC und über das Internet dem Authentifizierungsserver zugeleitet wird, in dem basierend darauf die Authentifikation durchgeführt wird.

Über den DSL-AC wird über das IP-Netzwerk die Leitungskennung an das "Triple-A-System" (AAA) übersandt und dort wird geprüft, ob die Leitungskennung vorhanden ist (Access Request).

Je nachdem welche Leitungskennung übertragen wurde, kann nun in dem Triple-A-System geprüft werden, ob der Nutzer für Sprach- oder Datendienste authentifiziert ist. Ist dies der Fall, wird dies vom Triple-A-System dem DSL-AC entsprechend mitgeteilt (Access Accept).

Es kann nun von dem Triple-A-System auf der Grundlage der Line-ID eine Autokonfiguration durchgeführt werden. Die Autokonfigurationsdaten können beispielsweise Bandbreiten, Telefonnummern, Useranmen, Paßworte, WLAN Keys oder Settings etc. umfassen.

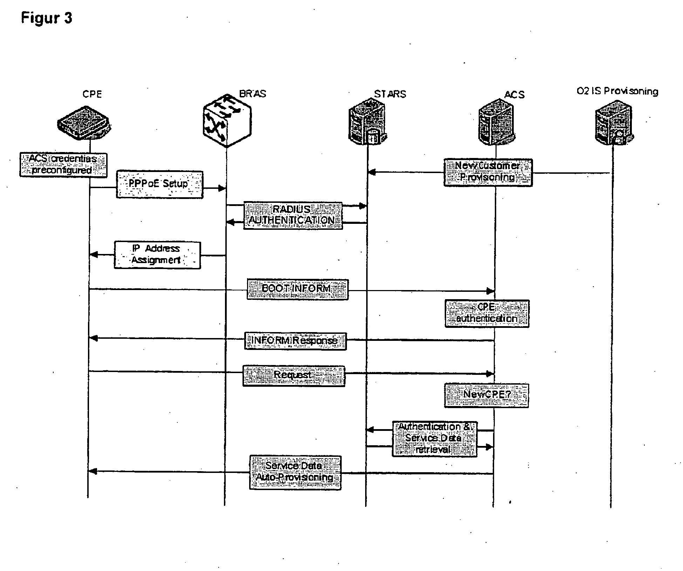

Figur 3 zeigt ein Ausführungsbeispiel, bei dem zum Zwecke des Updates bzw. der Erstkonfiguration seitens des CPE eine "Boot-Inform" Nachricht an den Autokonfigurationsserver ACS übermittelt wird. Nach erfolgter Authentifikation wird die Autoprovisionierung durchgeführt, sofern es sich um einen Neuzugang, d. h. eine "First-Time-Connection" handelt. Selbstverständlich und wie oben ausgeführt, ist das Verfahren jedoch nicht auf Neuzugänge beschränkt, sondern umfasst auch die Möglichkeit, die Neukonfiguration z.B. nach Resets beim Vorhandensein von Updates etc. vorzunehmen.

Die vorliegende Erfindung erlaubt die Authentifizierung des DSL-Nutzers ohne dessen Interaktion sowie die konfigurationsfreie Inbetriebnahme verschiedenster Anwendungen und Systeme, die den Supportaufwand seitens des Providers gegenüber bekannten Lösungen verringert.

## Patentansprüche

1. Verfahren zur Authentifizierung eines DSL-Nutzers, der über einen DSL-Router verfügt, wobei zum Zwecke der Authentifizierung automatisch eine Kennung an eine Authentifizierungseinheit übermittelt wird, in der auf der Grundlage der Kennung die Authentifizierung des Nutzers durchgeführt wird, und dass mittels einer Autokonfigurationseinheit über die Verbindung zum DSL-Router eine automatische Konfiguration des DSL-Routers und/oder von mit diesem in Verbindung stehenden Komponenten vorgenommen wird oder vornehmbar ist, **dadurch gekennzeichnet,**
**dass** der DSL-Router über einen DSLAM mit einem DSL-AC in Verbindung steht und dass die Kennung vom DSLAM ausgegeben wird, wobei die Kennung vom DSLAM im Rahmen der Übermittlung des PADI-Pakets und/oder des PADR-Pakets vom DSL-Router an den DSL-AC ergänzt wird.

2. Verfahren nach Anspruch 1, **dadurch gekennzeichnet, dass** es sich bei der Kennung um eine oder mehrere die Verbindung zum DSL-Router kennzeichnende Leitungskennungen handelt.

3. Verfahren nach Anspruch 1 oder 2, **dadurch gekennzeichnet, dass** es sich bei der Kennung um die Kennung einer Hardwarekomponente, insbesondere um die Kennung des DSL-Routers und/oder einer mit diesem in Verbindung stehenden Komponente handelt.

4. Verfahren nach einem der vorhergehenden Ansprüche, **dadurch gekennzeichnet, dass** die Autokonfiguration des DSL-Routers und/oder von mit diesem in Verbindung stehenden Komponenten durch die Autokonfigurationseinheit auf Anfrage durch den DSL-Router, in bestimmten Zeitabständen oder bei Aktualisierungsbedarf erfolgt.

5. Verfahren nach einem der vorhergehenden Ansprüche, **dadurch gekennzeichnet, dass** die Autokonfiguration die Übermittlung von Parametersätzen, Settings oder Firmware und/oder die Übermittlung eines WLAN-Keys und/oder die Übermittlung von Telefonnummern umfaßt.

6. Verfahren nach einem der vorhergehenden Ansprüche, **dadurch gekennzeichnet, dass** die Autokonfiguration die Übermittlung Usernamen und/oder Paßwörtern, insbesondere für die Nutzung von Voice over IP oder IP-TV oder zum Servermanagement umfaßt.

7. Verfahren nach einem der vorhergehenden Ansprüche, **dadurch gekennzeichnet, dass** die Autokonfiguration die Übermittlung von Informationen bzgl. der zu nutzenden Bandbreiten umfaßt.

8. Verfahren nach einem der vorhergehenden Ansprüche, **dadurch gekennzeichnet, dass** zeitgleich oder in zeitlichem Zusammenhang durch die Autokonfigurationseinheit eine Vielzahl von DSL-Routern und/oder von mit diesen in Verbindung stehenden Komponenten autokonfiguriert wird.

9. Verfahren nach einem der vorhergehenden Ansprüche, **dadurch gekennzeichnet, dass** in der Autokonfigurationseinheit oder in einer mit dieser in Verbindung stehenden Einheit Informationen über die Hardware und Software der einzelnen DSL-Router und/oder von mit diesen in Verbindung stehenden Komponenten vorliegt und dass die Autokonfiguration in Abhängigkeit von diesen Informationen vorgenommen wird und/oder dass in der Autokonfigurationseinheit oder in einer mit dieser in Verbindung stehenden Einheit Informationen über die Leitungskennung der einzelnen DSL-Router und/oder von mit diesen in Verbindung stehenden Komponenten vorliegt und dass die Autokonfiguration in Abhängigkeit von diesen Informationen vorgenommen wird.

10. Verfahren nach einem der vorhergehenden Ansprüche, **dadurch gekennzeichnet, dass** die von der Autokonfigurationseinheit übermittelten Daten zur Autokonfiguration von mit dem DSL-Router in Verbindung stehenden Komponenten dienen, insbesondere von Komponenten eines WLANs, VPN, PC, Voice over IP-Systems, IP-TV-Systems oder eines Gateways.

11. Verfahren nach einem der vorhergehenden Ansprüche, **dadurch gekennzeichnet, dass** es sich bei der durch die Autokonfigurationseinheit veranlaßten Autokonfiguration um eine Erst- oder Neukonfiguration handelt.

12. Verfahren nach einem der vorhergehenden Ansprüche, **dadurch gekennzeichnet, dass** beim Reset des DSL-Routers durch den Nutzer eine Neukonfiguration des DSL-Routers durch die Autokonfigurationseinheit erfolgt.

13. Verfahren nach einem der vorhergehenden Ansprüche, **dadurch gekennzeichnet, dass** für eine Teilnehmer-Anschlußleitung eine oder mehr als eine Kennung vergeben werden, insbesondere dass für eine Anschlußleitung zwei oder mehr als zwei Kennungen vergeben werden, die durch den Provider selektiv gesperrt werden können.

## Claims

1. A method of authenticating a DSL user who has a DSL router, wherein for the purpose of authentication an identifier is automatically transmitted to an authentication unit in which the authentication of the user is carried out on the basis of the identifier and wherein an automatic configuration of the DSL router and/or of components connected to it is or can be carried out by means of an autoconfiguration unit via the connection to the DSL router,
**characterised in that**
the DSL router is connected via a DSLAM to a DSL-AC; and **in that** the identifier is output by the DSLAM, with the identifier being added by the DSLAM within the framework of the transmission of the PADI packet and/or of the PADR packet from the DSL router to the DSL-AC.

2. A method in accordance with claim 1, **characterised in that** the identifier is one or more line identifiers characterising the connection to the DSL router.

3. A method in accordance with claim 1 or claim 2, **characterised in that** the identifier is the identifier of a hardware component, in particular the identifier of the DSL router and/or of a component connected thereto.

4. A method in accordance with one of the preceding claims, **characterised in that** the autoconfiguration of the DSL router and/or of components connected thereto takes place by the autoconfiguration unit on a request by the DSL router, at specific intervals or on a need for updating.

5. A method in accordance with one of the preceding claims, **characterised in that** the autoconfiguration comprises the transmission of parameter sets, settings or firmware and/or the transmission of a WLAN key and/or the transmission of telephone numbers.

6. A method in accordance with one of the preceding claims, **characterised in that** the autoconfiguration comprises the transmission of user names and/or passwords, in particular for the use of voice over IP or of IP-TV or for server management.

7. A method in accordance with one of the preceding claims, **characterised in that** the autoconfiguration comprises the transmission of information with respect to the bandwidths to be used.

8. A method in accordance with one of the preceding claims, **characterised in that** a plurality of DSL routers and/or of components connected thereto is/are autoconfigured at the same time or in temporal relation by the autoconfiguration unit.

9. A method in accordance with one of the preceding claims, **characterised in that** information on the hardware and software of the individual DSL routers and/or of components connected thereto is present in the autoconfiguration unit or in a unit connected thereto and that the autoconfiguration is carried out in dependence on this information; and/or **in that** information on the line identifier of the individual DSL routers and/or of components connected thereto is present in the autoconfiguration unit or in a unit connected thereto and that the autoconfiguration is carried out in dependence on this information.

10. A method in accordance with one of the preceding claims, **characterised in that** the data transmitted by the autoconfiguration unit serve the autoconfiguration of components connected to the DSL router, in particular of components of a WLAN, VPN, PC, voice over IP system. IP-TV system or of a gateway.

11. A method in accordance with one of the preceding claims, **characterised in that** the autoconfiguration initiated by the autoconfiguration unit is a first configuration or a new configuration.

12. A method in accordance with one of the preceding claims, **characterised in that** a new configuration of the DSL router by the autoconfigu ration unit takes place on the reset of the DSL router by the user.

13. A method in accordance with one of the preceding claims, **characterised in that** one identifier or more than one identifier are assigned for a subscriber connection line; in particular **in that** two identifiers or more than two identifiers are assigned for a connection line which can in particular be selectively blocked by the provider.

## Revendications

1. Procédé pour l'authentification d'un utilisateur DSL, disposant d'un routeur DSL, un identificateur étant transmis automatiquement à une unité d'authentification en vue de l'authentification, l'authentification de l'utilisateur étant effectuée dans l'unité d'authentification sur la base de l'identificateur, et qu'une configuration automatique du routeur DSL et/ou de composants en liaison avec celui-ci est ou peut être effectuée par l'intermédiaire de la liaison avec le routeur DSL au moyen d'une unité d'autoconfiguration, **caractérisé en ce que**
le routeur DSL est en liaison avec un concentrateur d'accès DSL par l'intermédiaire d'un DSLAM et **en ce que** l'identificateur est émis par le DSLAM, l'identificateur du DSLAM étant complété dans le cadre de la transmission du paquet PADI et/ou du paquet PADR du routeur DSL au concentrateur d'accès DSL.

2. Procédé selon la revendication 1, **caractérisé en ce que** l'identificateur consiste en une ou plusieurs identifications de ligne caractérisant la liaison avec le routeur DSL.

3. Procédé selon la revendication 1 ou 2, **caractérisé en ce que** l'identificateur est l'identificateur d'un composant matériel, en particulier l'identificateur du routeur DSL et/ou d'un composant en liaison avec celui-ci.

4. Procédé selon l'une des revendications précédentes, **caractérisé en ce que** l'autoconfiguration du routeur DSL et/ou de composants en liaison avec celui-ci est effectuée par l'unité d'autoconfiguration sur requête du routeur DSL, à des intervalles de temps déterminés ou quand une mise à jour est nécessaire.

5. Procédé selon l'une des revendications précédentes, **caractérisé en ce que** l'autoconfiguration comprend la transmission de jeux de paramètres, de réglages ou d'un firmware et/ou la transmission d'une clé de réseau sans fil et/ou la transmission de numéros de téléphone.

6. Procédé selon l'une des revendications précédentes, **caractérisé en ce que** l'autoconfiguration comprend la transmission de noms d'utilisateur et/ou de mots de passe, en particulier pour l'utilisation de la voix sur IP ou de la télévision IP ou pour la gestion de serveur.

7. Procédé selon l'une des revendications précédentes, **caractérisé en ce que** l'autoconfiguration comprend la transmission d'informations concernant les bandes passantes à utiliser.

8. Procédé selon l'une des revendications précédentes, **caractérisé en ce que** simultanément ou dans un rapport temporel, une pluralité de routeurs DSL et/ou de composants en liaison avec ceux-ci est autoconfigurée par l'unité d'autoconfiguration.

9. Procédé selon l'une des revendications précédentes, **caractérisé en ce que** des informations concernant le matériel et le logiciel des différents routeurs DSL et/ou de composants en liaison avec ceux-ci se trouvent dans l'unité d'autoconfiguration ou dans une unité en liaison avec celle-ci et **en ce que** l'autoconfiguration est effectuée en fonction de ces informations et/ou **en ce que** des informations concernant l'identification de ligne des différents routeurs DSL et/ou de composants en liaison avec ceux-ci se trouvent dans l'unité d'autoconfiguration ou dans une unité en liaison avec celle-ci et **en ce que** l'autoconfiguration est effectuée en fonction de ces informations.

10. Procédé selon l'une des revendications précédentes, **caractérisé en ce que** les données transmises par l'unité d'autoconfiguration servent à l'autoconfiguration de composants en liaison avec le routeur DSL, en particulier de composants d'un réseau sans fil, d'un VPN, d'un PC, d'un système de voix sur IP, d'un système de télévision IP ou d'une passerelle.

11. Procédé selon l'une des revendications précédentes, **caractérisé en ce que** l'autoconfiguration causée par l'unité d'autoconfiguration est une configuration initiale ou une reconfiguration.

12. Procédé selon l'une des revendications précédentes, **caractérisé en ce qu'**une reconfiguration du routeur DSL est effectuée par l'unité d'autoconfiguration lors de la réinitialisation du routeur DSL par l'utilisateur.

13. Procédé selon l'une des revendications précédentes, **caractérisé en ce qu'**un ou plus d'un identificateur est attribué pour une ligne de raccordement d'abonné, en particulier **en ce que** deux ou plus de deux identificateurs sont attribués pour une ligne de raccordement, qui peuvent être bloqués de manière sélective par le fournisseur.
